Europäisches Patentamt

European Patent Office

Office européen des brevets

(19)

(11) Veröffentlichungsnummer : **0 406 879 B1**

(12) **EUROPÄISCHE PATENTSCHRIFT**

(45) Veröffentlichungstag der Patentschrift :
**12.04.95 Patentblatt 95/15**

(51) Int. Cl.$^6$ : **G01S 13/90**

(21) Anmeldenummer : **90112924.7**

(22) Anmeldetag : **06.07.90**

(54) **Verfahren zur Extraktion von Bewegungsfehlern eines ein kohärentes Abbildungsradarsystem mitführenden Trägers aus Radar-Rohdaten und Einrichtung zur Durchführung des Verfahrens.**

(30) Priorität : **07.07.89 DE 3922427**

(43) Veröffentlichungstag der Anmeldung :
**09.01.91 Patentblatt 91/02**

(45) Bekanntmachung des Hinweises auf die Patenterteilung :
**12.04.95 Patentblatt 95/15**

(84) Benannte Vertragsstaaten :
**DE FR GB SE**

(56) Entgegenhaltungen :
**WO-A-88/10434**
**GB-A- 2 185 869**
**US-A- 4 771 287**
**IEEE TRANSACTIONS ON GEOSCIENCE AND REMOTE CONTROL, Band 28, Nr. 4, Juli 1990,Seiten 620-626, IEEE, New York, US; J.R. MOREIRA: "A new method of aircraft motion error extraction from radar raw data for real time motion compensation"**

(56) Entgegenhaltungen :
**IEEE IGARSS'89, 12TH CANADIAN SYMPO-SIUM ON REMOTE SENSING, 10. - 14. Juli 1989,Seiten 2217-2220, IEEE, New York, US; J.R. MOREIRA: "A new method of aircraft motion error extraction from radar raw data for real time SAR motioncompensation"**
**IEEE PLANS'88 PISITION LOCATION AND NA-VIGATION SYMPOSIUM RECORD, 29. Novem-ber -2. Dezember 1988, Seiten 259-268, IEEE, New York, US; D.J. DIFILIPPO et al.:"Evaluation of a kalman filter for SAR mo-tion compensation"**

(73) Patentinhaber : **Deutsche Forschungsanstalt für Luft- und Raumfahrt e.V.**
**Linder Höhe**
**Postfach 90 60 58**
**D-51126 Köln (DE)**

(72) Erfinder : **Moreira, Joao**
**Ludwig-Ganghofer-Str.24**
**D-8910 Landsberg (DE)**

(74) Vertreter : **von Kirschbaum, Albrecht, Dipl.-Ing. Patentanwalt,**
**Postfach 15 20**
**D-82102 Germering (DE)**

EP 0 406 879 B1

EP 0 406 879 B1

## Beschreibung

Die Erfindung betrifft ein Verfahren zur Extraktion von Bewegungsfehlern eines Trägers in einem mitgeführten, kohärenten Abbildungsradarsystem, nach dem Oberbegriff des Anspruchs 1 und eine Einrichtung zur Durchführung des Verfahrens nach dem Oberbegriff des Anspruchs 2.

Ein derartiges Verfahren und eine solche Einrichtung sind aus US-A-4 771 287 bekannt.

Kohärente Abbildungsradarsysteme sind in einen Träger, wie beispielsweise in einem Flugzeug, einen Flugkörper oder einen Hubschrauber u.ä., eingebaut. Aufgrund der bei solchen Trägern vorliegenden Gegebenheiten und aufgrund der Einflüsse der Umgebung, wie beispielsweise Turbulenzen, kann ein Träger eine vorgegebene Flugbahn normalerweise nicht einhalten. Der Träger weicht vielmehr von der gewünschten Sollflugbahn ab, was als Bewegungsfehler bezeichnet wird. Bei kohärenten Abbildungsradarsystemen verursachen Bewegungsfehler, welche in der Größenordnung der Wellenlänge des Radar-Sendesignals liegen, Verzerrungen, durch welche die Qualität einer Abbildung ganz wesentlich beeinträchtigt wird. Die Qualität einer Abbildung wird nach ihrer Auflösung, dem Kontrast sowie den geometrischen Verzerrungen beurteilt.

Um bei einer Abbildung eine hohe Auflösung, einen hohen Kontrast und niedrige geometrische Verzerrungen zu erreichen, müssen die empfangenen Rohdaten vor der Prozessierung bzw.

Generierung des Bildes korrigiert werden. Eine solche Korrektur kann in Echtzeit oder off-line durchgeführt werden. Eine Echtzeit-Korrektur erfolgt während des Empfangs von Rückstreusignalen mit Hilfe digitaler oder analoger Stellglieder.

Eine Off-line-Korrektur wird am Boden nach einer Abspeicherung der Rohdaten mit Hilfe von Rechenprogrammen durchgeführt.

Erst nach einer Korrektur, was als Bewegungskompensation bezeichnet wird, kann die Prozessierung bzw. Generierung eines Bildes durchgeführt werden. Zur Generierung eines Bildes wird eine Korrelation zwischen den Rohdaten und der zu erwartenden, theoretischen Phasenhistorie vorgenommen und erst nach einer solchen Korrelation wird ein hoch-aufgelöstes zweidimenionales Bild erhalten.

Alle bekannten Echtzeit-Bewegungskompensationssysteme sind auf bordeigene Trägheitsnavigationssysteme (INS Intertial Navigation System) oder andere Nagigationssysteme, wie GPS (Global-Positioning-System) angewiesen. Bei einigen Echtzeit-Bewegungskompensationssystemen wird zusätzlich eine einfache Doppleranalyse der Radar-Rohdaten durchgeführt, um den Driftwinkel des Trägers aufgrund von Windeinflüssen oder wegen der Beleuchtungsgeometrie zu schätzen. Dies ist beispielsweise im einzelnen in einer Veröffentlichung im Zusammenhang mit einem 1988 in Kanada abgehaltenen CCRS-Sympositium als Sonderdruck 88 CH 2572-6/88/0000-0015 von IEEE beschrieben.

Bei allen bekannten Off-line-Bewegungskompensationssystemen wird entweder eine ähnliche Verarbeitungsstruktur wie bei den Echtzeitsystemen angewendet und/oder es wird ferner während der Generierung des Bildes noch ein Autofokusverfahren durchgeführt.

Alle bekannten Bewegungskompensationssysteme weisen jedoch verschiedene Nachteile auf. Aufgrund der hohen Ansprüche an die Bewegungsdaten hinsichtlich der Genauigkeit, der Bandbreite und der Zeitstabilität müssen für Abbildungsradarsysteme, bei welchen eine Bewegungskompensation durchgeführt wird, beispielsweise in Sonderfertigung hergestellte Trägheitnavigationssysteme eingesetzt werden; hierdurch ergeben sich jedoch dann sehr hohe Anschaffungs-,Einbau und Wartungskosten. Bei Anwendung von mit GPS-Empfängern arbeitenden Bewegungskompensationssystemen ist eine Unterstützung durch eine Bodenstation unverzichtbar. Dadurch sind jedoch zum einen die Betriebskosten sehr hoch, und zum anderen sind erhebliche Beschränkungen bei der Wahl des Einsatzgebietes zu erwarten. Ohne eine Unterstützung durch eine Bodenstation sind jedoch die für eine Bewegungskompensation unbedingt erforderlichen GPS-Bewegungsdaten nicht genau genug.

Obwohl die Autofokusverfahren nicht auf Trägheits-Navigationssssysteme angewiesen sind, können diese Verfahren jedoch wegen des hohen Rechenaufwands nicht in Echtzeit durchgeführt werden. Obendrein haben Autofokusverfahren keine hohe Bandbreite und besitzen auch keine hohe Genauigkeit, so daß vorzugsweise die durch Windboen hervorgerufenen Bewegungsfehler nicht korrigiert werden können. Aus diesem Grund werden Autofokusverfahren normalerweise daher nur zur Schätzung der Vorwärtsgeschwindigkeit eines Trägers eingesetzt.

Aufgabe der Erfindung ist es daher, mit Hilfe eines Verfahrens zur Extraktion von Bewegungsfehlern eines Trägers in einem mitgeführten, kohärenten Abbildungsradarsystem aus Radar-Rohdaten sowie mit Hilfe einer Einrichtung zur Durchführung dieses Verfahrens die Bildqualität der Abbildungen zu verbessern, ohne auf ein Navigationssystem, wie beispielsweise INS, zurückgreifen zu müssen.

Gemäß der Erfindung ist dies bei einem Verfahren zur Extraktion von Bewegungsfehlern eines Trägers in einem mitgeführten, kohärenten Abbildungsradarsystem aus Rohdaten durch die Merkmale im kennzeichnenden Teil des Anspruchs 1 und bei einer Einrichtung zur Durchführung des erfindungsgemäßen Verfahrens durch die Merkmale im kennzeichnenden Teil des Anspruchs 2 erreicht.

Voraussetzung hierfür ist, daß die Bewegungsdaten eines das Abbildungsradarsystem mitführenden Trägers sehr genau bestimmt werden, damit die hierbei erhaltenen Rohdaten entsprechend korrigiert werden können; hierzu müssen folgende Bewegungen des Trägers bestimmt werden, nämlich dessen Vorwärtsgeschwindigkeit, die Ablage, d.h. die Abweichung in Blickrichtung der Antenne sowie der Driftwinkel des Trägers. Bei der Erfindung wird zur Extraktion von Bewegungsfehlern eine Trennung und Auswertung von zwei Anteilen eines Azimutspektrums durchgeführt werden, und zwar einer Trennung und Auswertung entweder eines - nachstehend so bezeichneten - Antennendiagramm-Anteils oder eines - nachstehend so bezeichneten - Rückstreuverhältnis-Anteils. Nachstehend wird lediglich die Auswertung des Antennendiagramm-Anteils bzw. dessen Schwerpunkt erläutert und abgehandelt; dieses Verfahren wird daher im folgenden der Einfachheit halber auch als (Spektrum-)Schwerpunktverfahren bezeichnet.

Gegenüber den eingangs erwähnten GPS-Systemen ist vor allem vorteilhaft, daß bei dem erfindungsgemäßen Bewegungsextraktionsverfahren für eine Bewegungskompensation alle notwendigen Informationen aus den Radar-Rohdaten entnommen werden. Im Unterschied zu den GPS-Systemen wird daher auch keine Bodenstation benötigt, so daß das erfindungsgemäße Verfahren erheblich flexibler und autarker einsetzbar ist.

Im Vergleich zu den Autofokus-Verfahren weist das erfindungsgemäße Bewegungsextraktionsverfahren eine viel höhere Bandbreite auf. Außerdem lassen sich viele Bewegungsfehler, wie die Beschleunigung, die Geschwindigkeit und die Ablage, d.h. die Abweichung in Blickrichtung der Antenne zusätzlich bestimmen; dies sind alles Daten, welche mit Autofokus-Verfahren nicht erhalten werden können. Obendrein ist eine Durchführung des erfindungsgemäßen Verfahrens in Echtzeit möglich, was sich bei Autofokus-Verfahren ebenfalls nicht realisieren läßt.

Nachfolgend wird die Erfindung anhand einer bevorzugten Ausführungsform unter Bezugnahme auf die anliegenden Zeichnungen erläutert. Es zeigen:

| | |
|---|---|
| Fig.1a | schematisch eine generelle Darstellung einer Radargeometrie; |
| Fig.1b | ein Azimutspektrum eines Entfernungstors in Form eines Diagramms; |
| Fig.2a bis 2c | schematisierte Darstellungen von Diagrammen, welche in ihrer Gesamtheit ein Azimutspektrum bilden, wobei |
| Fig.2a | schematisch das Azimutspektrum eines Entfernungstors, |
| Fig.2b | den schematischen Verlauf eines Spektrums eines Antennendiagramms und |
| Fig.2c | den schematischen Verlauf eines Spektrums eines Rückstreuverhältnisses wiedergeben; |
| Fig.3 | den schematischen Verlauf eines Azimutspektrums zu zwei unterschiedlichen Zeitpunkten (t = i - 1 und t = i) sowie deren Korrelation bei dem erfindungsgemäßen Verfahren; |
| Fig.4 | ein Blockdiagramm einer Einrichtung zur Durchführung des Verfahrens, und |
| Fig.5 | eine schematische Darstellung einer Verknüpfung des erfindungsgemäßen Verfahrens und eines Verfahrens zur Bestimmung eines Rückstreuverhältnis-Anteils zur Bewertung der bezogen auf Kontrastverhältnisse am Boden zweckmäßigen Bewegungsextraktion. |

Bei dem erfindungsgemäßen Verfahren zur Extraktion von Bewegungsfehlern wird grundsätzlich das Azimutspektrum der Radar-Rohdaten und nachstehend inbesondere der sogenannte Antennendiagramm-Anteil bzw. der Spektrum-Schwerpunkt ausgewertet, weshalb dieses Verfahren, wie bereits erwähnt, auch als (Spektrum-)Schwerpunktverfahren bezeichnet wird.

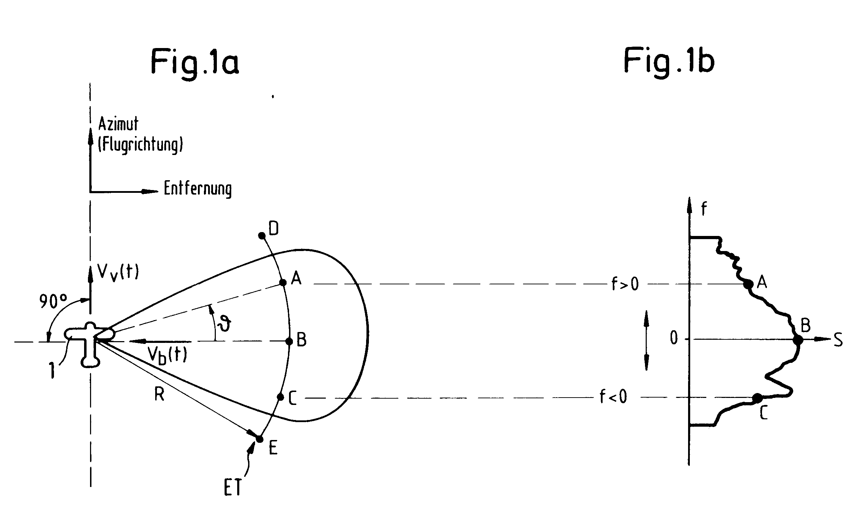

In Fig. 1a ist ein Beispiel einer üblichen Radargeometrie und des entsprechenden Azimutspektrums wiedergegeben. Ein Träger eines Radarsystems in Form eines schematisiert angedeuteten Flugzeugs 1 soll mit einer Geschwindigkeit $V_v$ fliegen und dabei einen Geschwindigkeitfehler $V_b$ in der Blickrichtung einer nicht näher dargestellten Antenne haben, deren Hauptkeule schematisiert wiedergegeben ist, wobei deren Öffnungswinkel im vorliegenden Fall in der Größenordnung von etwa 17° liegt. Die beiden Geschwindigkeitsgrößen $V_v$ und $V_b$ sind von der Zeit t abhängig und sind daher in der Zeichnung und nachstehend als $V_v$ (t) bzw. $V_b(t)$ bezeichnet. Mit der an dem Flugzeug 1 angebrachten Radar-Antenne wird ein abzubildendes Gelände mit der Antennen-Hauptkeule beleuchtet, welche quer zur Flugrichtung ausgerichtet ist. Als zu erfassende Ziele sind beispielsweise Punktziele A, B, C, D und E in einem gewissen Entfernungstor Et vorgegeben. In der Fig.1 werden nur die Punktziele A, B und C beleuchtet.

Aufgrund der Fluggeschwindigkeit $V_v$(t) und der Geschwindigkeit $V_b$(t) in Blickrichtung enthält jedes Rückstreusignal einen Frequenz- oder Dopplerversatz gemäß der nachstehenden Gl.(1):

$$F_{doppler} = \frac{2 \cdot V_v(t) \cdot \sin\vartheta}{\lambda} + \frac{2 \cdot V_b(t) \cdot \cos\vartheta}{\lambda} \quad (1)$$

wobei $\vartheta$ der Winkel zwischen der Radarsichtlinie zu dem jeweiligen Punktziel und der Linie senkrecht zum Flugweg ist, (die in dem dargestellten Beispiel durch den Zielpunkt B verläuft) und mit $\lambda$ die Wellenlänge des aus-

gesendeten Radarimpulses bezeichnet ist.

Für das Punktziel A wird mit einem Winkel $\vartheta > 0$ und mit der Fluggeschwindigkeit $V_v(t)$ ein positiver Frequenzversatz erzeugt, während für das Punktziel C bei einem Winkel $\vartheta < 0$ mit einer Fluggeschwindigkeit $V_v(t)$ ein negativer Frequenzversatz erzeugt wird. Für das Punktziel B ( = 0) entsteht durch die Geschwindigkeit $V_v(t)$ kein Frequenzversatz.

In Fig.1b ist schematisch ein Azimutspektrum des Entfernungstors Et dargestellt, wobei auf der senkrechten Achse die Frequenz f und auf der waagrechten Achse die Leistung S bezüglich der drei Punktziele A, B und C aufgetragen ist. Ferner ist links neben der senkrechten Achse angedeutet, daß in positiver Richtung die Frequenz f größer 0 und in negativer Richtung kleiner 0 ist.

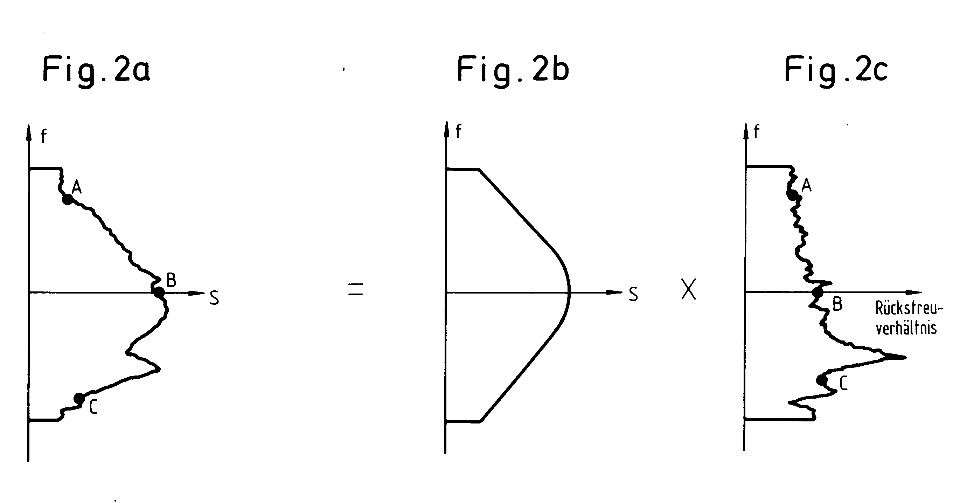

In Fig. 2a bis 2c ist in schematischen Kurvenverläufen die Zusammensetzung eines Azimutspektrums wiedergegeben, wobei in den einzelnen Darstellungen auf der senkrechten Achse jeweils die Frequenz f und auf der waagrechten Achse die Leistung S aufgetragen sind. Wie insbesondere den Fig.2b und 2c zu entnehmen ist, setzt sich das in Fig.2a schematisch wiedergegebene Azimutspektrum eines Entfernungstors Et im wesentlichen aus dem Produkt des in Fig. 2b dargestellten Antennendiagramms in der Azimutrichtung und des durch die jeweiligen Zielpunkte beispielsweise A, B und C gegebenen und in Fig.2c dargestellten Rückstreuverhältnisses zusammen, wobei unter Rückstreuverhältnis das Verhältnis zwischen der Leistung eines empfangenen und eines gesendeten Signals verstanden wird.

Der in Fig.2b wiedergegebene Antennendiagramm-Anteil eines Azimutspektrums ist durch einen Driftwinkel und durch die Geschwindigkeit in der Antennen-Blickrichtung nach der folgenden Gl. (2) in der Frequenz versetzt, wobei sich für einen Frequenzversatz $f_a$ ergibt:

$$f_a \cong \frac{2 \cdot V_v(t) \cdot \sin\varphi(t)}{\lambda} + \frac{2 \cdot V_b(t)}{\lambda} \quad (2)$$

wobei $\varphi(t)$ der Driftwinkel des Trägers ist.

Der Anteil des Rückstreusignalverhältnisses des Azimutspektrums wird nur durch die Geschwindigkeit in der Antennen-Blickrichtung entsprechend der nachstehenden Gl(3) in der Frequenz versetzt. Für diesen Frequenzversatz $f_r$ ergibt sich dann:

$$f_r \cong \frac{2 \cdot V_b(t)}{\lambda} \quad (3)$$

Der Grundgedanke bei dem Verfahren zur Extraktion der Bewegungsfehler eines ein kohärentes Abbildungs-Radarsystem mitführenden Trägers besteht darin, daß die beiden in Fig.2b und 2c schematisch wiedergegebenen beiden Anteile eines Azimutspektrums, nämlich der Antennendiagramm-Anteil und der Rückstreuverhältnis-Anteil voneinander getrennt und separat ausgewertet werden.

Hierbei hängt die Genauigkeit des Verfahrens von dem Verlauf des Rückstreuverhältnisses bzw. von dem Kontrast $\tau$ des Azimutspektrums ab. Der Kontrast $\tau$ eines Azimutspektrums ist folgendermaßen definiert:

$$\tau = \frac{\text{Streuung der Leistung des Azimutspektrums}}{\text{Mittelwert der Leistung des Azimutspektrums}} \quad (4)$$

Falls ein abzubildendes Gebiet ein konstantes Rückstreuverhältnis aufweist, ist der Kontrast $\tau$ des Azimutspektrums klein, d.h. die Streuung ist annähernd gleich 0, so daß dann der Spektrumverlauf bzw. der Versatz des Rückstreuverhältnis-Anteils nicht genau festgestellt werden kann. Falls jedoch ein abzubildendes Gebiet unterschiedliche Rückstreuverhältnisse aufweist, d.h. eine Streuung hat, die wesentlich größer als 0 ist, ist auch der Kontrast $\tau$ hoch und die Bestimmung des Spektrumversatzes genau.

Gebiete, wie das Meer, eine Wüste u.ä., haben im allgemeinen ein sehr niedriges konstantes Rückstreuverhältnis, während Gebiete, wie beispielsweise das Festland mit Städten, Wiesen, Bergen usw., kein homogenes Rückstreuverhältnis und damit einen hohen Kontrast im Azimutspektrum aufweisen.

Bei Gebieten, welche ein weitgehend homogenes Rückstreuverhältnis und damit einen geringen Kontrast aufweisen, wird daher gemäß der vorliegenden Erfindung das sogenannte Schwerpunktverfahren angewendet, während bei Gebieten mit einem hohen Kontrast $\tau$ ein einen Rückstreuverhältnis-Anteil ausnutzendes Verfahren angewendet werden kann, welches Gegenstand einer am selben Tag beim Deutschen Patentamt hinterlegten Patentanmeldung P 39 22 428.7 (Anwaltsakte DFO-8977) ist .

Im Falle eines geringen Kontrastes $\tau$ muß der in Fig.2b schematisiert dargestellte Antennendiagramm-Anteil eines Azimutspektrums ausgewertet werden. Hierzu wird dem Azimutspektrum der jeweilige Rückstreuverhältnis-Anteil entnommen, welcher im Unterschied zu Fig.2c bei Gebieten mit einem geringen Kontrast $\tau$ keine ausgeprägten Maxima aufweist, weswegen auch die nacheinander gebildeten Rückstreuverhältnisse im allgemeinen einander verhältnismäßig ähnlich sind. Diese Ähnlichkeit nacheinander aufgenommener Azimutspektren wird daher ausgenutzt, um das Rückstreusignalverhältnis zu schätzen. Sobald das Rückstreusignalverhältnis geschätzt werden kann, kann der Antennendiagramm-Anteil dadurch bestimmt werden, daß das erhaltene Azimutspektrum jeweils durch das geschätzte Rückstreuverhältnis geteilt wird. Hierbei wird die Genauigkeit der Schätzung bei gleichmäßigeren Rückstreusignal-Verläufen, d.h. bei einem niedrigen Kontrast $\tau$

höher, da sich dann der Antennendiagramm-Anteil immer deutlicher erkennen läßt.

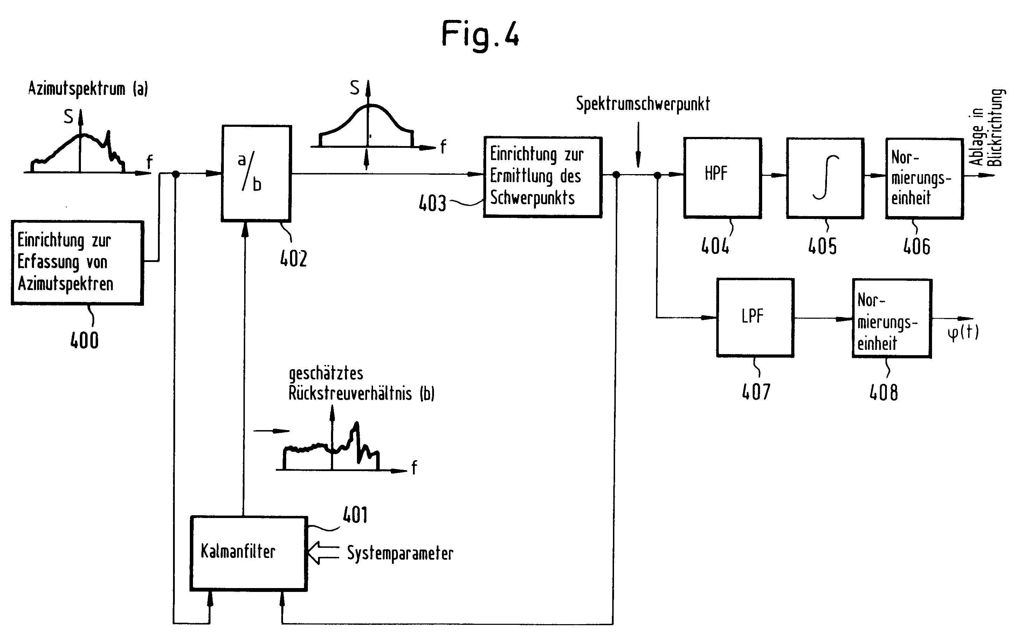

Ein Blockdiagramm einer Einrichtung zur Durchführung des den Antennendiagramm-Anteil berücksichtigenden Verfahrens zur Extinktion von Bewegungsfehlern eines ein Abbildungsradarsystem mitführenden Trägers, d.h. des sogenannten (Spektrum-)Schwerpunktverfahrens ist im einzelnen in Fig.4 wiedergegeben.

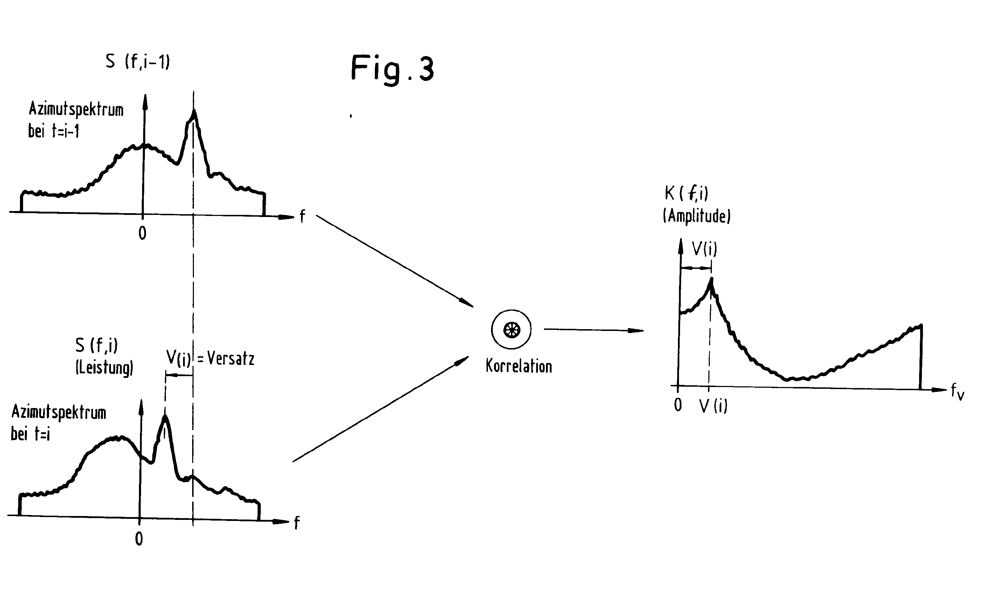

Zur Abbildung eines Gebiets mit weitgehend homogenen Rückstreuverhältnissen wird dieses Gebiet mittels der Hauptkeule einer an einem Flugzeug 1 angebrachten Antenne beleuchtet. Hierdurch werden über einen bestimmten Zeitraum mit einer Einrichtung 400 zur Erfassung von Azimutspektren zeitlich aufeinanderfolgend, d.h. zu unterschiedlichen Zeitpunkten i (wobei i ein ganzzahliger Wert größer 1 ist) fortlaufend Azimutspektren erfaßt, wobei dieser Zeitraum zur Aufnahme der Daten viel kürzer ist als die Zeit, welche das Flugzeug benötigt, um das abzubildende Gebiet zu überfliegen. Zwei derartiger Azimutspektren sind für die Zeitpunkte t = i - 1 sowie t = i als Beispiel im linken Teil der Fig.3 schematisiert dargestellt.

Die zeitlich nacheinander in Abhängigkeit von der Radarfrequenz f aufgenommenen Azimutspektren mit einer Leistung S(f,i) werden über ein Vorhersage- oder Kalmanfilter 401 geleitet, in welchem dem Azimutspektrum jeweils der Rückstreuverhältnis-Anteil entnommen wird, wie oberhalb des Blockes 401 dargestellt ist.

Aufgrund der i.a. großen Ähnlichkeit solcher nacheinander aufgenommener Azimutspektren kann auf diese Weise das Rückstreuverhältnis bestimmt werden. In einer dem Kalmanfilter 401 nachgeschalteten Teilungseinheit 402 wird das mittels der Einrichtung 400 gebildete Azimutspektrum a durch das geschätzte Rückstreuverhältnis b geteilt, was in dem Block 402 durch a/b angedeutet ist. Hierdurch wird der links neben dem Block 403 schematisch dargestellte Antennendiagramm-Anteil erhalten.

In einer Einrichtung 403 wird dann der Schwerpunkt des erhaltenen Antennendiagramm-Anteils ermittelt, welcher dem in Gl.(2) angegebenen Frequenzversatz $f_a$ entspricht. Mittels eines der Einrichtung 403 nachgeordneten Tiefpaßfilters 407 wird dann die Abtrennung des Driftwinkels $\varphi$ (t) erreicht, welcher im ersten Term der Gl.(2) enthalten ist, während die Abtrennung der Geschwindigkeit $V_b(t)$ in der Blickrichtung des Entfernungstors Et mittels eines Hochpaßfilters 404 erfolgt, wobei die Geschwindigkeit $V_b(t)$ im zweiten Term der Gl.(2) enthalten ist.

Eine derartige Trennung des Driftwinkels $\varphi$ (t) von der Geschwindigkeit $V_b(t)$ in der Antennenblickrichtung mit Hilfe eines Tief- bzw. eines Hochpaßfilters 407 bzw. 404 ist möglich, da der durch Wind hervorgerufene Driftwinkel eine sehr niedrige Bandbreite von beispielsweise 0 bis 0,1Hz aufweist, während die Geschwindigkeit $V_b$ in Blickrichtung der Antenne eine wesentlich höhere Bandbreite hat, wobei nur wieder die höheren Frequenzanteile für die Bewegungskompensation wichtig sind, d.h. Frequenzanteile ab 0,2Hz.

Zur Ermittlung der Ablage, d.h. der Abweichung in Blickrichtung der Antenne werden die von dem Hochpaßfilter 404 durchgelassenen Frequenzanteile in einer Integriereinheit 405 einer Integration unterzogen und anschließend noch in einer Normiereinheit 406 normiert, während die vom Tiefpaßfilter 407 durchgelassenen Frequenzanteile in einer Normiereinheit 408 noch normiert werden. Am Ausgang der Normiereinheit 406 werden dann als Bewegungsdaten die Ablage, d.h. die Abweichungen in Blickrichtung der Antenne erhalten, während am Ausgang der Normiereinheit 408 der Driftwinkel $\varphi$ (t) erhalten wird.

Das erfindungsgemäße Verfahren, welches vorstehend wiederholt auch als Schwerpunktverfahren bezeichnet worden ist, hat beispielsweise gegenüber den eingangs angeführten, in vielen Fällen verwendeten Trägheitsnavigationssystemen den Vorteil, daß sich das vorliegende Bewegungsextraktionsverfahren prinzipiell erheblich preiswerter realisieren läßt, und daß sich die erforderlichen Rechenvorgänge mit den heute zur Verfügung stehenden Rechensystemen und -anlagen sowohl in Echtzeit als auch Off-line besonders leicht und schnell durchführen lassen.

Wie vorstehend bereits erwähnt, kann das hier als Schwerpunktverfahren bezeichnete, erfindungsgemäße Verfahren nur dann mit Erfolg angewendet werden, wenn das abzubildende Gebiet ein homogenes Rückstreuverhältnis, d.h. einen geringen Kontrast τ aufweist, was bei der Abbildung der See bzw. des Meers, einer Wüste, u.ä. der Fall ist. Bei Abbildung von Gebieten, die kein homogenes Rückstreuverhältnis, d.h. einen verhältnismäßig hohen Kontrast τ haben, was bei Abbildungen von Gebieten über dem Festland, d.h. bei der Abbildung von Land, Städten, Wiesen, Bergen u.ä. der Fall ist, würden mit dem vorstehend beschriebenen Schwerpunktverfahren keine genauen Ergebnisse erhalten werden können.

Hierbei hat der Verlauf eines Rückstreuverhältnisses immer eine negative Frequenzverschiebung, da ein das Radarsystem mitführender Träger (1) immer in Vorwärtsrichtung fliegt und damit alle Streuer, d.h. alle Objekte, die vom Radar beleuchtet und zurückgestreut werden, einen negativen Verlauf des Dopplerversatzes erhalten.

Damit sind zwei nacheinander aufgenommene Spektren einander sehr ähnlich, und es wird nach einer entsprechenden Entwicklung eine aus den Gl.'en 1 und 3 abgeleitete Frequenzverschiebung mit einem Frequenzversatz V (in Hz) erhalten:

$$V \;=\; \frac{2 \cdot V_v^2(t) \cdot \Delta t}{\lambda \cdot R} \;+\; \frac{2 \cdot \dot{V}_b(t) \cdot \Delta t}{\lambda} \quad (5)$$

wobei R die Entfernung des Entfernungstors von der am Träger 1 angebrachten Antenne und $\Delta t$ der Zeitabstand zwischen den zeitlich nacheinander aufgenommenen Spektren ist. Wie im unteren Teil der Fig. 3 wiedergegeben, läßt sich der Versatz durch die Lage eines Maxiums mit Hilfe einer Korrelation der beiden Spektren bestimmen, wie im rechten Teil der Fig.3 schematisch angedeutet ist, wobei dann bezogen auf das dargestellte Beispiel sich der in Fig. rechts dargestellte Kurvenverlauf ergibt; hierbei ist auf der vertikalen Achse die Amplitude in Abhängigkeit von dem auf der horizontalen Achse aufgetragenen Versatz $f_v$ und der Größe i wiedergegeben.

Zur Abbildung eines Gebiets mit unterschiedlichen Rückstreuverhältnissen wird dieses Gebiet mittels der Hauptkeule einer an einem Flugzeug 1 angebrachten Antenne beleuchtet. Hierdurch werden über einen bestimmten Zeitraum zeitlich aufeinanderfolgend, d.h. zu unterschiedlichen Zeitpunkten i (wobei i ein ganzzahliger Wert größer 1 ist) fortlaufend Azimutspektren erfaßt. Zwei derartiger Azimutspektren sind für die Zeitpunkte t = i - 1 sowie t = i als Beispiele im linken Teil der Fig.3 schematisiert dargestellt. Zwischen jeweils zwei zeitlich unmittelbar nacheinander in Abhängigkeit von der Radarfrequenz f aufgenommenen Azimutspektren mit einer Leistung S (f,i) wird die Korrelation K (f,i) gebildet, nämlich K (f,i) = S(f,i) ⊛ S(f,i-1). Zur Bildung des Maximums einer Korrelation K(f,i) wird dann anhand der Lage eines Maximums der Frequenzversatz V(i) des Rückstreuverhältnis-Anteils bestimmt, was schematisiert dem rechten Teil der Fig.3 zu entnehmen ist und der vorstehend wiedergegebenen Gl.(5) entspricht.

Die Trennung der Vorwärtsgeschwindigkeit $V_v(t)$, welche im ersten Term der Gl. (5) enthalten ist, von der Beschleunigung $\dot{V}_b(t)$ in Blickrichtung des Entferungstors Et, welche im zweiten Term der Gl. (5) enthalten ist, wird mittels unterschiedlicher Filterungen durchgeführt. Dies ist möglich, da die Vorwärtsgeschwindigkeit $V_v$ bei Windboen bis zu 1m/s eine sehr niedrige Bandbreite aufweist, die beispielsweise von 0 bis 0,1 Hz reicht. Die Beschleunigung $\dot{V}_b$ in der Antennen-Blickrichtung hat dagegen eine wesentlich größere Bandbreite, wobei obendrein nur die höheren Frequenzenanteile für eine Bewegungskompensation von Bedeutung sind, wobei beispielsweise nur Frequenzanteile ab 0,2Hz zu berücksichtigen sind.

Damit die Ermittlung der Ablage in der Antennen-Blickrichtung möglich ist, werden die bei der Filterung durchgelassenen Daten integriert und anschließend noch normiert, während die zur Bestimmung der Vorwärtsgeschwindigkeit durchgelassenen Frequenzanteile lediglich noch normiert werden müssen, um dann als Bewegungsdaten die Ablage, d.h. die Abweichung in der Antennenblickrichtung sowie die Vorwärtsgeschwindigkeit zu erhalten.

Eine gezielte Anwendung der beiden vorgenannten Verfahren wird dann in optimaler Weise erreicht, wenn der Kontrast eines Azimutspektrums ständig ausgewertet und dem Verfahren, welches jeweils die genaueren Werte liefert, mehr Gewichtung bei der Ermittlung der Ablage, d.h. der Abweichung in Blickrichtung gegeben wird.

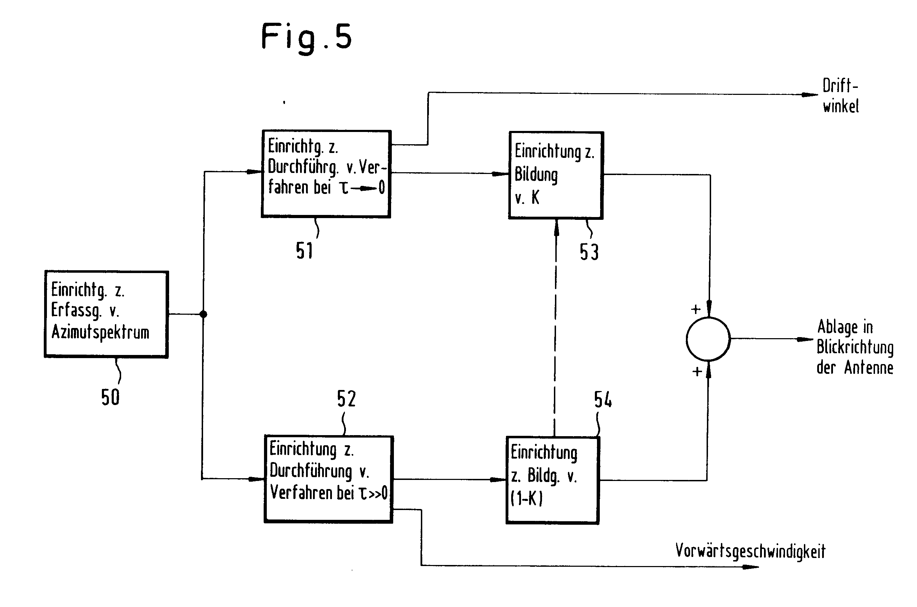

In Fig.5 ist ein Blockdiagramm zur Verknüpfung beider Verfahren wiedergegeben. Für ein Gebiet, wie beispielsweise die See oder eine Wüste, mit einem homogenen Rückstreuverhältnis wird, wie eingangs bereits ausführlich dargelegt, dessen Azimutspektrum einen geringen Kontrast $\tau$ aufweisen, so daß mit dem sogenannten Schwerpunktverfahren gemäß der Erfindung das genaueste Ergebnis erhalten wird. Dagegen wird für ein Gebiet, wie beispielsweise Land, Wald und/oder Stadt, mit unterschiedlichen Rückstreuverhältnissen dessen Azimutspektrum einen hohen Kontrast $\tau$ aufweisen, so daß das den Rückstreuverhältnis-Anteil ausnutzende Verfahren das genaueste Ergebnis liefert.

Eine Gewichtung der beiden Verfahren wird in Fig.5 durch einen Faktor k bestimmt. Hierbei wird nach dem augenblicklichen Kontrast $\tau$ des Azimuts der Faktor k jeweils Werte zwischen 0 und 1 annehmen; dies bedeutet in der Praxis, daß für geringe Kontraste $\tau$, d.h. $\tau \to 0$, der Faktor k gegen 1 (d.h. $k \to 1$) geht, während für große Kontraste $\tau$, d.h. $\tau \gg 0$ der Faktor k gegen 0, d.h. $k \to 0$ geht.

Zur Bildung der Ablage, d.h. der Abweichung in Blickrichtung der Antenne werden daher im Blockschaltbild der Fig.5 einer Einrichtung 50 zur Erfassung von Azimutspektren eine Einrichtung 51 zur Durchführung des Verfahrens bei niedrigem Kontrast $\tau$ ($\tau \to 0$) und eine Einrichtung 53 zur Bildung des Faktors k nachgeschaltet, während einer Einrichtung 52 zur Durchführung des Versatzverfahrens (bei einem Kontrast $\tau \gg 0$) bzw. der Normierungseinheit 45, wie im einzelnen in Fig.4 dargestellt ist, eine Einrichtung 54 zur Bildung der Differenz (1 - k) nachgeschaltet ist.

**Patentansprüche**

1.  Verfahren zur Extraktion von Bewegungsfehlern eines Trägers (1) in einem mitgeführten, kohärenten Abbildungsradarsystem aus Rohdaten, in welchem zur Abbildung von Gebieten über einen bestimmten Zeitraum fortlaufend zeitlich aufeinanderfolgende Azimutspektren gebildet werden, welche sich aus dem Produkt eines Antennendiagramms in der Azimutrichtung und eines durch Zielpunkte gegebenen Rückstreuverhältnisses zusammensetzen, worunter ein Verhältnis zwischen der Leistung eines empfangenen und eines gesendeten Signals zu verstehen ist, und welche sich in zwei Anteile, nämlich einen Antennendiagramm-Anteil und einen Rückstreuverhältnis-Anteil aufteilen lassen, dadurch **gekennzeichnet,**
daß mittels eines Vorhersage- oder Kalman-Filters mit Hilfe der gebildeten Azimutspektren und von eingegebenen Systemparametern eine Schätzung des Rückstreuverhältnis-Anteils von Gebieten mit weitgehend homogenen Rückstreuverhältnissen durchgeführt wird;
daß durch Teilen des Azimutspektrums durch den geschätzten Rückstreuverhältnis-Anteil der Antennendiagramm-Anteil gewonnen wird;
daß aus dem gewonnenen Antennendiagramm-Anteil dessen Spektrum-Schwerpunkt ermittelt wird;
daß durch Frequenzfilterungen eine Trennung eines - anschließend noch zu normierenden - Driftwinkels ($\varphi$ (t)) von der Geschwindigkeit ($V_b$(t)) in der Antennenblickrichtung durchgeführt wird, und
daß die erhaltene Geschwindigkeit ($V_b$(t)) in der Antennenblickrichtung einer Integration unterzogen wird, um nach einer anschließenden Normierung die Abweichung in der Antennenblickrichtung zu erhalten.

2. Einrichtung zur Durchführung des Verfahrens nach Anspruch 1, mit einer Azimut-Erfassungseinrichtung (400), um fortlaufend zeitlich aufeinanderfolgende Azimutspektren zu bilden, die sich aus dem Produkt eines Antennendiagramms in der Azimutrichtung und eines durch Zielpunkte gegebenen Rückstreuverhältnisses zusammensetzen, worunter ein Verhältnis zwischen der Leistung eines empfangenen und eines gesendeten Signals zu verstehen ist, und die sich in zwei Anteile, nämlich einen Antennendigramm-Anteil und einen Rückstreuverhältnis-Anteil aufteilen lassen,
**gekennzeichnet**
durch ein Vorhersage- oder Kalman-Filter (401) zur Schätzung des Rückstreuverhältnis-Anteils, welchem eine Teilungseinheit (402) zur Bildung des Antennendiagramm-Anteils nachgeschaltet ist;
durch eine Einrichtung (403) zur Bildung des Spektrum-Schwerpunkts eines Antennendiagramm-Anteils;
durch ein Hochpaß-Filter (404) zur Ermittlung der Geschwindigkeit ($V_b$(t)) in der Antennenblickrichtung, welchem zur Bestimmung der Abweichung in der Antennenblickrichtung eine Integriereinheit (405) und eine Normiereinheit (406) nachgeschaltet sind, und
durch ein Tiefpaß-Filter (407), welchem zur Bestimmung des Driftwinkels ($\varphi$ (t)) eine Normiereinheit (408) nachgeordnet ist.

## Claims

1. Method for extracting motion errors of a carrier (1) transporting a coherent imaging radar system form radar raw data, imaging terrains forming azimuth spectra continuously succesive in time over a set period of time which are composed of the product of an antenna pattern in the azimuth direction and of the ground reflectivities given by target points which are understood to be the ratio between the output of a received and a transmitted signal, and which may be separated in two parts, namely an antenna pattern part and a ground reflectivity part characterized in that
the estimate of the ground reflectivity part of terrains with largely homogenous reflectivities is determined by a prediction or Kalman filter with the thus formed azimuth spectra and entered system parameters;
the antenna pattern part is obtained by dividing the azimuth spectrum by the estimated ground reflectivity part;
the doppler centroid from the received antenna pattern part is determined;
a separation of the drift angle ($\varphi$ (t)) - to be normalized later - from the velocity ($V_b$(t))in the line of sight direction of the antenne is performed by low pass filtering; and
the obtained velocity ($V_b$(t)) in the line of sight direction of the antenna is subjected an integration in order to obtain, after a subsequent normalization, the displacement in the lign of sight direction of the antenna.

2. Device for executing the method in accordance with claim 1, comprising an azimuth detection device (400) forming azimuth spectra continuously succesive in time over a set period of time which are composed of the product of an antenna pattern in the azimuth direction and of the ground reflectivity given by target points which is understood to be the ratio between the output of a received and a transmitted signal, and which may be separated in two parts, namely an antenna pattern part and a ground reflectivity part characterized by

a prediction or Kalman filter (401) for estimating the ground reflectivity part, downstream of which a dividing unit (402) for forming the antenna pattern part is placed;

a device (403) for forming the doppler centroid of an antenna pattern part;

a high-pass filter (404) for determining the velocity ($V_b$(t)) in the line of sight direction of the antenna, downstream of which an integrating unit (405) and a normalization unit (406) have been placed for the determination of the displacement in the line of sight direction of the antenna; and

a low-pass filter (407), downstream of which a normalization unit (408)is placed for the determination of the drift angle ($\varphi$ (t)).

## Revendications

1. Procédé d'extraction d'erreurs de mouvement d'un porteur (1) dans un système radar d'imagerie cohérente embarqué à partir de données brutes, dans lequel sont formés pendant une durée déterminée et de façon continue des spectres azimutaux se succédant dans le temps pour la formation de l'image de régions, qui sont constitués par le produit d'un diagramme d'antenne dans la direction azimutale et d'un rapport de rétrodiffusion fourni par des points-cible, ceci devant être compris comme indiquant un rapport entre la puissance d'un signal reçu et celle d'un signal émis, et qui peuvent être subdivisés en deux parties, à savoir une partie à diagramme d'antenne et une partie à rapport de rétrodiffusion, caractérisé en ce que:

    on réalise une évaluation de la partie à rapport de rétrodiffusion de régions à rapports de rétrodiffusion largement homogènes au moyen d'un filtre de prédiction ou Kalman à l'aide des spectres azimutaux formés et de paramètres de système fournis;

    on obtient la partie à diagramme d'antenne par division du spectre azimutal par la partie à rapport de rétrodiffusion évaluée;

    on détermine le centre de gravité du spectre à partir de la partie à diagramme d'antenne obtenu;

    on réalise par des filtrages de fréquence une séparation d'un angle de dérive ($\varphi$ (t)) - qui doit être normalisé par la suite - de la vitesse ($V_b$(t)) dans la direction de visée de l'antenne; et

    on soumet la vitesse obtenue ($V_b$(t)) à une intégration dans la direction de visée de l'antenne de manière à obtenir, après normalisation subséquente, la déviation dans la direction de visée de l'antenne.

2. Dispositif pour la mise en oeuvre du procédé selon la revendication 1, comprenant un dispositif de détection azimutal (400) pour former de façon continue des spectres azimutaux se succédant dans le temps, qui sont constitués par le produit d'un diagramme d'antenne dans la direction azimutale et d'un rapport de rétrodiffusion fourni par des points-cible, ceci devant être compris comme indiquant un rapport entre la puissance d'un signal reçu et celle d'un signal émis, et qui peuvent être subdivisés en deux parties, à savoir une partie à diagramme d'antenne et une partie à rapport de rétrodiffusion, caractérisé par

    un filtre de prédiction ou Kalman (401) destiné à évaluer la partie à rapport de rétrodiffusion, à la suite duquel est montée une unité de subdivision (402) pour la formation de la partie à diagramme d'antenne;

    un dispositif (403) pour la formation du centre de gravité du spectre d'une partie à diagramme d'antenne;

    un filtre passe-haut (404) pour déterminer la vitesse ($V_b$(t)) dans la direction de visée de l'antenne, à la suite duquel sont montées pour la détermination de la déviation dans la direction de visée de l'antenne une unité d'intégration (405) et une unité de normalisation (406); et

    un filtre passe-bas (407) à la suite duquel est montée une unité de normalisation (408) pour déterminer l'angle de dérive ($\varphi$ (t)).

Fig.1a

Fig.1b

Azimut
(Flugrichtung)

Entfernung

$V_v(t)$

90°

$\vartheta$

A

B

$V_b(t)$

1

R

C

D

E

ET

f

f > 0

0

f < 0

A

B

C

S

EP 0 406 879 B1

Fig. 2a

Fig. 2b

Fig. 2c

= ... X ...

Rückstreuverhältnis

EP 0 406 879 B1

Fig.3

S (f,i-1)

Azimutspektrum
bei t=i-1

S (f,i)
(Leistung)

V(i) = Versatz

Azimutspektrum
bei t=i

Korrelation

K ( f,i)
(Amplitude)

V(i)

EP 0 406 879 B1

# Fig.4

Azimutspektrum (a)

Spektrumschwerpunkt

Einrichtung zur
Erfassung von
Azimutspektren

400

a/b

402

Einrichtung zur
Ermittlung des
Schwerpunkts

403

HPF

404

∫

405

Normierungseinheit

406

Ablage in
Blickrichtung

LPF

407

Normierungseinheit

408

φ(t)

geschätztes
Rückstreuverhältnis (b)

401

Kalmanfilter

Systemparameter

EP 0 406 879 B1

# Fig.5

EP 0 406 879 B1